# EUROPEAN PATENT SPECIFICATION

(11) **EP 0 559 496 B1**
(45) Date of publication and mention of the grant of the patent: **27.08.1997**
(21) Application number: 93301696.6
(22) Date of filing: 05.03.1993
(51) Int. Cl.: C08G 2/28, C08G 2/10

(54) **Process for producing polyoxymethylene copolymers**
Verfahren zur Herstellung von Polyoxymethylen-Copolymeren
Procédé de préparation de copolymères de polyoxyméthylène

(30) Priority: 06.03.1992 JP 49476/92; 09.03.1992 JP 50597/92
(43) Date of publication of application: 08.09.1993
(73) Proprietor: POLYPLASTICS CO. LTD., Chuo-Ku Osaka-shi Osaka 541 (JP); HOECHST AKTIENGESELLSCHAFT, 65926 Frankfurt am Main (DE)
(72) Inventor: Yamamoto, Kaoru, Fuji-shi, Shizuoka (JP); Maeda, Nagayoshi, Shizuoka (JP); Kamiya, Makoto, Fujinomiya-shi, Shizuoka (JP); Murao, Toshiro, Fuji-shi, Shizuoka (JP); Reuschel, Gerhard, W-6843 Biblis-Nordheim (DE); Fleischer, Dietrich, W-6100 Darmstadt (DE)
(74) Representative: Jackson, Peter

(56) References cited:
- EP-A- 116 456
- DE-A- 1 420 292
- PATENT ABSTRACTS OF JAPAN vol. 7, no. 114 (C-166)(1259) 18 May 1983 & JP-A-58 034 819
- PATENT ABSTRACTS OF JAPAN vol. 7, no. 118 (C-167)(1263) 21 May 1983& JP-A-58 038 713

## Description

The present invention relates to a process for producing a polyoxymethylene copolymer having improved thermal stability and a process for producing a polyoxymethylene copolymer having a high degree of polymerization. More particularly, it relates to a process for producing a polyoxymethylene copolymer containing a reduced amount of unstable terminal groups and having improved thermal stability. It further relates to a process for producing a substantially linear polyoxymethylene copolymer of a high degree of polymerization. The processes of the invention employ specific polymerization conditions and a treatment for deactivating a catalyst in the cationic copolymerization of trioxane with a cyclic ether or a cyclic acetal.

Polyoxymethylene (hereinafter referred to as POM) copolymers have been known for a long time as engineering plastic materials. A common copolymerization process for producing them comprises using a cyclic acetal such as trioxane as a main monomer and a cyclic acetal or a cyclic ether having adjacent carbon atoms as a comonomer, copolymerizing these monomers with the use of a cationically active catalyst, then contacting the copolymerization product with an agent for neutralizing or a deactivating the catalyst or a solution thereof to deactivate the catalyst and then stabilizing the copolymer to thereby give the final product. Although the molecular weight of the copolymer can be controlled to be below a certain level by using a chain transfer agent, there has been scarcely proposed any method for producing a POM copolymer of a high molecular weight exceeding a certain level but merely suggested that it is preferable to conduct copolymerization while minimizing the content of active impurities in the copolymerization system. As a matter of course, it is preferable to minimize the main chain scission in the post-treatment to be effected after the copolymerization. However, no particular method therefor has been proposed hitherto. In general, it is recommended that a copolymerization product is pulverized and neutralized by contacting with a neutralizing agent or a deactivator or a solution thereof at a relatively high temperature (for example, 50°C or above - see, for example, U.S. Patent No. 2,989,509 and Japanese Patent Publication A No. 34819/1983). However the degrees of polymerization of the POM copolymers obtained by these known processes are limited and it is very difficult to obtain a copolymer having a high degree of polymerization and a melt index (MI) (190°C, load: 2160 g) of 2.0 g/10 min or below, in particular, from 0.1 to 1.5 g/10 min, particularly in the case of a substantially linear POM copolymer, unless a special crosslinked monomer is employed. When the copolymer thus obtained is subjected to, for example, extrusion molding or blowing, the molten resin is liable to undergo drawdown due to the insufficient tension thereof in a molten state and thus the moldability is considerably reduced. Under the existing circumstances, furthermore, the mechanical properties, in particular toughness of the resin and the performance and qualities of molded products prepared therefrom are restricted.

In addition, POM copolymers obtained by these known processes generally contain a considerably large amount of unstable terminal groups and, therefore, it is necessary to stabilize these POM copolymers by eliminating the unstable parts therefrom in order to put them into practical use. The thus-required post-treatment process has the disadvantages of being complicated and consuming much energy. When a crude POM copolymer containing a reduced amount of unstable parts is obtained after the copolymerization, such advantages that the final product has an improved stability and that the post-treatment including stabilization can be simplified can be achieved. Accordingly, it has been desired to establish a process for producing a copolymer containing a reduced amount of unstable parts in copolymerization. For this purpose, investigations have been made on processes for producing a crude copolymer containing a reduced amount of unstable terminals. For example, although it is believed to be desirable to conduct the copolymerization while minimizing the content of active impurities in the copolymerization system, this technique is also limited. Further, although another process which comprises conducting the copolymerization by incorporating a specified stabilizer into the copolymerization system was proposed (refer to, for example, Japanese Patent Publications A Nos. 227916/1984 and 1216/1985), this process is not always sufficient. As for processes for deactivation of the catalyst after the completion of the copolymerization, it has been usually recommended that the copolymerization product be finely pulverized and neutralized by contact with a neutralizing agent or a deactivator or a solution thereof at a relatively high temperature described above (for example, 50°C or above) (refer to, for example, U.S. Patent No. 2,989,509 and Japanese Patent Publication-A No. 34819/1983). However, the pulverization per se of the whole crude copolymer into extremely fine particles is complicated and difficult. In addition, the inventors have confirmed, as will be described below, that the deactivation at the relatively high temperature suggested in these specifications is not preferred.

Under these circumstances, the present inventors have conducted extensive studies in order to obtain a crude POM copolymer containing an extremely reduced amount of unstable terminals, the load in the stabilization step being considerably relieved, and having an extremely high thermal stability. They have found that the abovementioned object can be achieved by adjusting the content of active impurities which would give the copolymers unstable terminal groups to be below a predetermined level in the course of the copolymerization reaction, restricting the amount of the catalyst to be used in the copolymerization reaction to a specific range and further employing specific conditions for deactivating the catalyst.

In addition, the present inventors have conducted extensive studies in order to obtain a POM copolymer having a substantially linear structure and a high degree of polymerization, containing an extremely reduced amount of unstable terminal groups, the load in the stabilization step being considerably relieved, being excellent in qualities including mechanical properties such as toughness and having an extremely high thermal stability which can be scarcely obtained by known methods. As a result, they have successfully found that the above-mentioned object can be achieved by controlling the content of active impurities contained in the reaction system, which might serve as a short-stopping or chain transfer agent during the copolymerization reaction, restricting the amount of a catalyst to be used in the copolymerization reaction to a specific range and further employing specific conditions for deactivating the catalyst.

In particular, it has been found that the methods for deactivating copolymerization catalysts employed in the known processes suffer from some problems and that deactivation at a relatively high temperature (for example, 50°C or above), which has been proposed as the most adequate procedure, unexpectedly gives an adverse effect. Namely, in the competition between the neutralization/deactivation of the catalyst and the decomposition caused by the residual catalyst, the latter preferentially proceeds at a high temperature. Thus side reactions such as decomposition occur before the deactivation sufficiently proceeds and, therefore, the decomposition of the main chain by the residual catalyst occurs within a short period of time in the course of the deactivation of the copolymerization catalyst. Thus it is observed that the decomposition of the main chain occurs, the degree of polymerization is lowered and, as a result, unstable parts are newly formed prior to the completion of the deactivation of the catalyst. From this point of view, the present inventors have further studied on the deactivation of the polymerization catalysts. Consequently, they have found that quenching the reaction product obtained after the completion of the copolymerization reaction rather than heating it is preferable since it suppresses the occurrence of side reactions such as decomposition and succeeded in the production of a POM copolymer containing an extremely reduced amount of unstable parts, especially a linear POM copolymer containing an extremely reduced amount of unstable parts and having a high degree of polymerization by combining this finding with the above-mentioned requirements in the copolymerization reaction.

Accordingly, the first embodiment of the present invention relates to a process for producing a polyoxymethylene copolymer by copolymerizing trioxane as a main monomer with a cyclic ether or a cyclic formal as a comonomer in the presence of a catalyst comprising boron trifluoride or a coordination compound thereof, characterized by conducting the copolymerization while adjusting the total content of impurities, which give an unstable end to an obtained copolymer, in the reaction system to 1 x 10⁻²% by mole or below based on the total amount of the monomers and the content of the catalyst to be used in the copolymerization to 1 x 10⁻³ to 1 x 10⁻²% by mole based on the total amount of the monomers, and adding a basic compound and cooling the obtained product to a temperature of 45°C or below within 30 seconds after the completion of the copolymerization to deactivate the catalyst.

The characteristics of the first embodiment of the present invention resides in that the decomposition reaction in the copolymerization reaction be suppressed by controlling the amounts of impurities and a catalyst contained in the reaction system in the copolymerization reaction each to be on a given level and the reaction product obtained after the completion of the copolymerization reaction be quenched immediately under specific conditions to retard and suppress the side reactions including decomposition which occur together with the progress of the neutralization/ deactivation of the catalyst.

Further, the second embodiment of the present invention relates to a process for producing a substantially linear polyoxymethylene copolymer of a high degree of polymerization by copolymerizing trioxane as a main monomer with a cyclic ether or a cyclic formal as a comonomer in the presence of a catalyst comprising boron trifluoride or a coordination compound thereof, characterized by conducting the copolymerization while adjusting the total content of impurities in the reaction system having short-stopping or chain transfer function to 1 x 10⁻²% by mole or below based on the total amount of the monomers and the content of the catalyst to be used in the copolymerization to 1 x 10⁻³ to 1 x 10⁻²% by mole based on the total amount of the monomers, and adding a basic compound and cooling the obtained product to a temperature of 45°C or below within 30 seconds after the completion of the copolymerization to deactivate the catalyst.

The basic requirement of the second embodiment of the present invention resides in that side reactions in the copolymerization reaction be suppressed and thus the growth reaction be preferentially carried out by controlling the amounts of impurities and a catalyst contained in the reaction system each to be on a given level, so as to maintain the ultimate degree of polymerization at a high level, and the reaction product obtained after the completion of the copolymerization reaction is quenched under specific conditions to retard and suppress the side reactions including decomposition which occur together with the progress of the neutralization/ deactivation of the catalyst.

In the first embodiment of the present invention, examples of the active impurities which are contained in the monomers and which form an unstable end, that is, which give an unstable end to an obtained copolymer, during the copolymerization reaction, include water, alcohols (for example, methanol) and acids (for example, formic acid). It is first of all necessary that the total content of these impurities be 1 x 10⁻²% by mole or below, preferably 5 x 10⁻³% by mole or below, based on the total amount of the monomers in the reaction system in the first embodiment of the present invention. An excessively large active impurity content is undesirable for obtaining a POM copolymer containing a reduced amount of unstable terminals as a matter of course.

In the first embodiment of the present invention, an arbitrary amount of a chain transfer agent which forms no unstable terminals, such as a low molecular weight linear acetal compound having alkoxy groups at both ends, e.g. methylal, can be incorporated for the purpose of adjusting the molecular weight of the POM copolymer.

In the second embodiment of the present invention, examples of the active impurities contained in the monomers, which might serve as a short stopping agent or a chain transfer agent during the copolymerization reaction, include water, alcohols (for example, methanol), acids and esters thereof (for example, formic acid and formates) and low molecular weight linear acetals (for example, methylal). It is first of all necessary that the total content of these impurities be 1 x 10⁻²% by mole or below, preferably 5 x 10⁻³% by mole or below, based on the total amount of the monomers in the reaction system in the second embodiment of the present invention. When this content is excessively large, any POM copolymer of a high degree of polymerization (a low MI) cannot be obtained, however adequate other conditions may be.

Although the presence of a low molecular weight acetal compound having alkoxy groups at both ends, such as methylal, would not cause any increase in the amount of unstable terminals in the copolymer, it serves as a chain transfer agent and thus lowers the degree of polymerization. Thus it is desirable to control the content of such a compound, the presence of which is not preferable for achieving the object of the present invention, to be below the limit as specified above in the second embodiment of the present invention.

Secondly, the amount of the catalyst to be used in the copolymerization reaction is an important requirement in the present invention. As the catalyst, boron trifluoride or a coordination compound thereof usually employed in the art may be used. It is necessary to use the catalyst in an amount of from 1 x 10⁻³ to 1 x 10⁻²% by mole, preferably from 1 x 10⁻³ to 7 x 10⁻³% by mole, based on the total amount of the monomers. By limiting the content of the catalyst to the range as defined above, a substantial decrease in the degree of polymerization and the formation of unstable terminals in the course of the copolymerization can be effectively prevented. When the amount of the catalyst exceeds 1 x 10⁻²% by mole, it becomes difficult to maintain the copolymerization temperature on a suitable level and the decomposition reaction becomes dominant, which hinders the formation of a polymer of a high degree of polymerization or a polymer containing a reduced amount of unstable terminals. When the amount of the catalyst is less than 1 x 10⁻³% by mole, the copolymerization is retarded, the polymerization yield per unit time is reduced and the increase in the degree of polymerization is undesirably affected.

In order to achieve the full effects of the present invention the copolymerization temperature is an important factor. It is desirable to maintain the copolymerization temperature substantially at from 60 to 105°C, preferably from 65 to 100°C, throughout the copolymerization. The copolymerization temperature closely relates to the amount of the catalyst. A general condition, for example, a jacket temperature range generally available by using an aqueous medium on a common industrial scale can be attained by controlling the amount of the catalyst as specified above and, therefore, no specific regulation is needed in this case. Strictly speaking, however, it is desirable to maintain the copolymerization temperature within the range as specified above by considering conditions other than the amount of the catalyst, for example, secondary factors such as the scale, the structure of a polymerizer and the jacket temperature.

In the present invention, conditions other than the above-mentioned ones are not particularly restricted. Thus the process may be effected in accordance with known methods. The cyclic ether or the cyclic formal to be used as a comonomer herein is a compound represented by the following general formula:

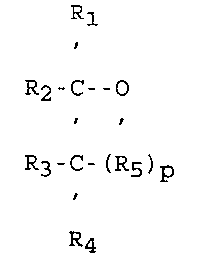

In the above formula, R₁, R₂, R₃ and R₄ may be either the same or different from each other and each represents a hydrogen atom or an alkyl group, in general, a hydrogen atom. R₅ represents a methylene or oxymethylene group, an alkyl-substituted methylene or oxymethylene group (in this case, p is an integer of from 0 to 3), or a divalent group represented by the formula: -(CH₂)_{q}-OCH₂- or -(O-CH₂-CH₂)q-OCH₂- (in this case, p is 1 and q is an integer of from 1 to 4).

Examples of such a comonomer include ethylene oxide, 1,3-dioxolane, diethylene glycol formal, 1,4-butanediol formal, 1,3-dioxane and propylene oxide. Among these, particularly preferred examples of the comonomer include ethylene oxide, 1,3-dioxolane, 1,4-butanediol formal and diethylene glycol formal. In the first embodiment of the present invention, the content of the copolymer may range from 0.2 to 10% by weight, preferably from 0.4 to 5% by weight, based on the trioxane. In the second embodiment of the present invention, the content of the copolymer may range from 0.2 to 10% by weight, preferably from 0.2 to 5% by weight, based on the trioxane.

In the first embodiment of the present invention, although the use of the chain transfer agent which forms no unstable terminals for the purpose of adjusting the molecular weight of the POM copolymer is not restricted as described above, the amount of a chain transfer agent which forms the unstable terminals must be limited within the range of the amount of the above-described active impurities.

The copolymerization of the present invention can be conducted by using the same apparatus and the same method as those employed in the known processes for polymerizing trioxane. More specifically, both of the batch process and the continuous one may be employed and any of the solution polymerization, melt bulk polymerization and other polymerization processes may be selected. From the industrial viewpoint, it is usual and preferable to use the continuous bulk polymerization process wherein liquid monomers are employed and a solid polymer in the form of a powdery mass is obtained as the polymerization proceeds. In this case, an inert liquid medium may be present together, if necessary.

As the polymerization apparatus to be used in the present invention, a reactor provided with a stirrer employed in general may be selected in the case of batch polymerization, while a Ko-kneader, a twin-screw continuous extruder, a two-shaft paddle-type continuous mixer or those which have been proposed as the apparatus for the continuous polymerization of trioxane may be used in the case of continuous polymerization. A polymerization apparatus of a closed system may consist of two or more stages. It is particularly preferable to use an apparatus provided with a pulverizer whereby a solid copolymer formed by the copolymerization reaction can be obtained in the form of fine particles.

The conditions of the post-treatment to be effected after the completion of the copolymerization reaction are also an extremely important requirement for achieving the object of the present invention. Namely, the reaction mixture discharged from the polymerizer after the completion of the copolymerization should be cooled substantially to a temperature of 45°C or lower within 30 seconds. It is preferable to cool to 45°C or lower within 20 seconds after the copolymerization reaction and more preferable to cool substantially to a temperature ranging from 35 to 15°C within 30 seconds. The expression "after the completion of the polymerization" as used herein means "when discharged from the substantially closed polymerizer", namely, the point at which the reaction mixture comes into contact with the atmosphere containing oxygen, moisture, etc., or a medium such as water. A higher cooling rate gives a better result and it is important to shorten the holding time at a high temperature. It has been found that when the cooling rate is low or, in particular, such a high temperature as proposed hitherto (for example, 50°C or higher) is employed, side reactions would preferentially proceed even when a neutralizing agent or a deactivator for the catalyst is immediately added and, as a result, the decomposition or a decrease in the degree of polymerization caused thereby and the formation of additional unstable terminals cannot be sufficiently suppressed and the degree of polymerization at the completion of the copolymerization cannot be maintained on an adequate level.

These side reactions including decomposition would more preferentially proceed at a higher temperature. At a high temperature immediately after the completion of the polymerization, the moisture contained in the atmosphere with which the reaction product is contacted exerts undesirable effects, namely, the side reactions are promoted by the contact with the moisture. It is, therefore, undesirable to expose the reaction product to a moisture-containing atmosphere at a high temperature, even though the moisture content is on the usual atmospheric level. In an inert atmosphere substantially free from moisture, therefore, the degree of polymerization is scarcely lowered. Such a state may be rather referred to as a continuity of the copolymerization and the extent of the side reactions is reduced even though the cooling rate is relatively low. After sufficiently cooling in such a substantially moisture-free inert atmosphere, the catalyst may be deactivated by contacting the reaction product with a neutralizing agent or a deactivator for a sufficiently long period of time. In the presence of moisture, on the other hand, it is necessary not to maintain the reaction product at a high temperature but to rapidly cool the same. In general, the cooling may be rapidly effected by immersing the reaction product in a relatively large amount of cold liquid.

It is particularly effective for rapid cooling to use an aqueous solution having a large heat capacity. Although the presence of water is undesirable for the side reactions at a high temperature as described above, a relatively large amount of water is a suitable medium from the viewpoint of cooling rate. Thus, cooling with an aqueous solution is rather effective since the high temperature period, where the side reactions preferentially proceeds, can thereby be shortened.

As a matter of course, a neutralizing agent or a deactivator for the catalyst comprising a basic compound is added to the aqueous solution to neutralize or deactivate the catalyst simultaneously with the cooling.

It is also a matter of course that the pulverization of the reaction product is preferable for the substantial cooling of the same, in particular, in the case of a bulk polymerization product. It is most advantageous that the product discharged from the polymerizer is in the form of fine particles. When the copolymerization product is in the form of relatively large particles, it is desirable to rapidly pulverize the particles in the cooling medium, in particular, in an early stage of the cooling.

According to the processes of the present invention, the catalyst can be completely neutralized and deactivated without accompanied by any side reaction for a long time thereafter by quenching the copolymerization product to 45°C or lower, preferably to 35 to 15°C, within 30 seconds. After completely neutralizing and deactivating the catalyst, the reaction product scarcely suffers from any decrease in the degree of polymerization or the formation of unstable terminal groups even though the temperature is elevated in the subsequent stage, unless the employed medium is acidic. Thus it can be washed and dried at a relatively high temperature thereafter. On the contrary, an extremely low temperature of 10°C or lower is not preferable, since the deactivation reaction proceeds very slowly and thus requires a very long period of time.

Examples of the basic compound to be used in the present invention for neutralizing and deactivating the catalyst include ammonia, amines such as triethylamine and tributylamine, alkali and alkaline earth metal hydroxides and other known deactivators for catalysts. It is preferable to dissolve these deactivators in the cooling medium for the reaction product, for example, water or an organic solvent such as cyclohexane, benzene or toluene and neutralize the catalyst by contacting these deactivators with the catalyst simultaneously with cooling of the copolymer. It is particularly preferable to formulate these deactivators into an aqueous solution.

In the present invention, after the deactivation of the catalyst, the copolymer is subjected, if necessary, to washing, the separation and recovery of unreacted monomers and drying and, furthermore, stabilization if necessary. Then additives such as various stabilizers are added thereto and the copolymer is melt-kneaded and formulated into pellets. As described above, the POM copolymer of the present invention contains a much-reduced amount of unstable terminal groups and, therefore, the load in the stabilization step is relieved. Thus a sufficiently stable copolymer can be obtained by a simple finishing treatment. Further, the residual unstable parts can be eliminated by volatilization in the melt-kneading extrusion step for adding, for example, stabilizers.

Furthermore, the process according to the second embodiment of the present invention makes it possible to obtain a POM copolymer having a linear structure and an extremely high degree of polymerization (an Mi of 2.0 or below, particularly, from 0.1 to 1.5) which cannot be obtained by the conventional methods. This POM copolymer is applicable to processing by special molding such as blowing and it is expected that the properties thereof, for example, toughness are remarkably improved.

As described above, the copolymers obtained by the processes of the present invention contain a reduced amount of unstable parts, which makes it possible to simplify the post-treatment and to give a final product having a high thermal stability.

The copolymer obtained by the process according to the second embodiment of the present invention has a substantially linear structure, an extremely high degree of polymerization (an MI of 2.0 or below, in particular, 1.5 or below) and an excellent thermal stability. Thus molded products having a good performance and excellent qualities, which cannot be obtained from conventional copolymers, can be produced therefrom. Further, this copolymer may be subjected not only to injection molding but also extrusion molding and blowing, which is difficult in prior arts, and therefore the application range is enlarged.

### Examples

The following non-limiting Examples (and Comparative Examples) illustrate the present invention in greater detail. The terms and measurement methods employed in them are as follows:
% or ppm:
   by weight unless otherwise noted.
Polymerization yield:
   the ratio (% by weight) of the obtained copolymer to the total starting monomers.
Melt index (MI):
   A melt index (g/10 min) measured at 190°C under a load of 2160 g is given. This is evaluated as a characteristic corresponding to the molecular weight. Namely, a lower MI means a larger molecular weight (provided that a small amount of a given stabilizer is added before the measurement so as to prevent decomposition during the measurement).
Alkali decomposition ratio (content of unstable part):
   1 g of a copolymer is added to 100 ml of a 50% aqueous solution of methanol containing 0.5% of ammonium hydroxide and heated in a closed container at 170°C for 45 minutes. Then, the amount of the formaldehyde decomposed and dissolved in the solution is determined and expressed in % based on the copolymer.
Thermal weight loss ratio:
   5 g of a copolymer is pulverized and thoroughly mixed with a powdery stabilizer comprising 2,2'-methylenebis(4-methyl-6-t-butylphenol) (0.5%) and dicyandiamide (0.1%). After heating at 220°C in the atmosphere for 45 minutes, the weight loss ratio is measured.

### Examples 1 to 5 and Comparative Examples 1 to 3

Use was made of a continuous mixing reactor which had a cross section composed of two circles partly overlapping each other and was provided with a barrel having a jacket for passing a heating (cooling) medium therethrough placed outside and two rotating shafts having stirring/screwing paddles located in the direction of the major axis placed therein. Warm water at 80°C was passed through the jacket and the two rotating shafts vas rotated at a rate of 100 rpm. Then trioxane as a main monomer containing 3.3% of 1,3-dioxolane as a comonomer and 700 ppm of methylal as a chain transfer agent was continuously fed into one end of the reactor. Simultaneously, a 1% solution of boron trifluoride butyl etherate in cyclohexane was continuously added to the same end in such a rate as to give each concentration as specified in Table 1 based on the total amount of the monomers (trioxane plus 1,3-dioxolane), thus effecting copolymerization.

Table 1 shows the results of an analysis on the components and amounts of the impurities contained in the above-mentioned starting materials.

Next, to the reaction product (about 90°C) discharged from the outlet of the polymerizer was added an aqueous solution containing 1,000 ppm of triethylamine at 20°C (final amount: about 4 times as much) immediately after the discharge. The mixture was pulverized and cooled to 45°C within 20 seconds after the discharge and further cooled to 30°C within 10 seconds thereafter. After stirring at this temperature for 60 minutes, the mixture was centrifuged and dried to thereby give the final copolymer.

Table 1 shows the polymerization yields and the properties of the obtained copolymers.

### Examples 6 to 11 and Comparative Examples 4 to 7

Copolymerization was effected under the same conditions as those employed in the above Example 2 (see Table 1). The reaction product discharged from the outlet of the polymerizer was pulverized while mixing with each of the aqueous alkali solutions listed in Table 2. Thus the catalyst was deactivated under the temperature conditions as specified in Table 2.

The temperature (cooling) conditions were controlled by adjusting the temperature and the amount of the employed aqueous alkali solution and by multistage addition at different temperatures. After cooling and stirring at the given temperature for 60 minutes, the mixture was centrifuged and dried to thereby give the final copolymer. In each case, the polymerization yield was about 72%. Table 2 shows the properties of the obtained copolymers.

### Examples 12 to 16 and Comparative Examples 8 to 10

Use was made of a continuous mixing reactor which had a cross section composed of two circles partly overlapping each other and was provided with a barrel having a jacket for passing a heating (cooling) medium therethrough placed outside and two rotating shafts having stirring/screwing paddles located in the direction of the major axis placed therein. Warm water at 80°C was passed through the jacket and the two rotating shafts vas rotated at a rate of 100 rpm. Then, trioxane as a main monomer containing 3.3% of 1,3-dioxolane as a comonomer was continuously fed into one end of the reactor. Simultaneously, a 1% solution of boron trifluoride butyl etherate in cyclohexane was continuously added to the same end in such a rate as to give each concentration as specified in Table 3 based on the total amount of the monomers (trioxane plus 1,3-dioxolane), thus effecting copolymerization.

Table 3 shows the results of an analysis on the components and amounts of the impurities contained in the above-mentioned starting materials.

Next, to the reaction product (about 90°C) discharged from the outlet of the polymerizer was added an aqueous solution containing 1,000 ppm of triethylamine at 20°C (final amount: about 4 times as much) immediately after the discharge. The mixture was pulverized and cooled to 45°C within 20 seconds after the discharge and further cooled to 30°C within 10 seconds thereafter. After stirring at this temperature for 60 minutes, the mixture was centrifuged and dried to thereby give the final copolymer.

Table 3 shows the polymerization yields and the properties of the obtained copolymers.

### Examples 17 to 22 and Comparative Examples 11 to 14

Copolymerization was effected under the same conditions as those employed in the above Example 13 (see Table 3). The reaction product discharged from the outlet of the polymerizer was pulverized while mixing with each of the aqueous alkali solutions listed in Table 4. Thus the catalyst was deactivated under the temperature conditions as specified in Table 4.

The temperature (cooling) conditions were controlled by adjusting the temperature and the amount of the employed aqueous alkali solution and by multistage addition at different temperatures. After cooling and stirring at the given temperature for 60 minutes, the mixture was centrifuged and dried to thereby give the final copolymer. In each case, the polymerization yield was about 73%. Table 4 shows the properties of the obtained copolymers.

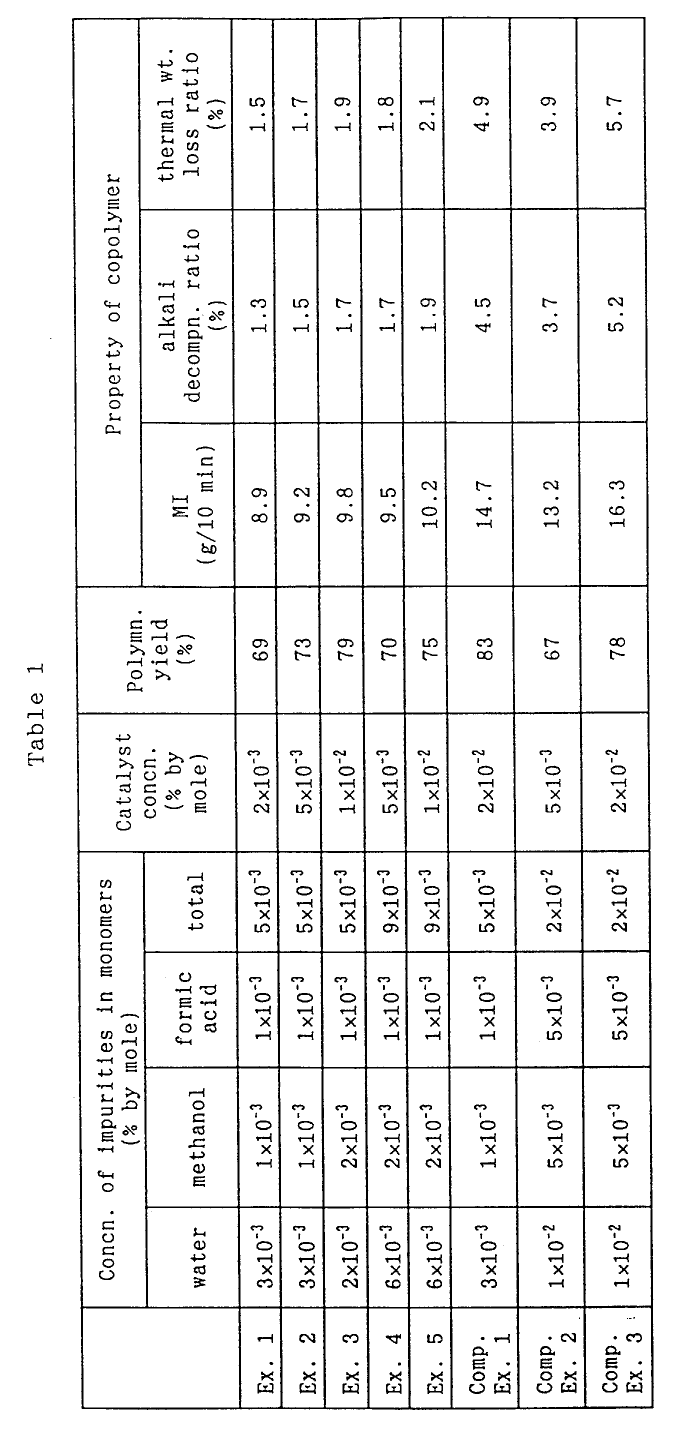

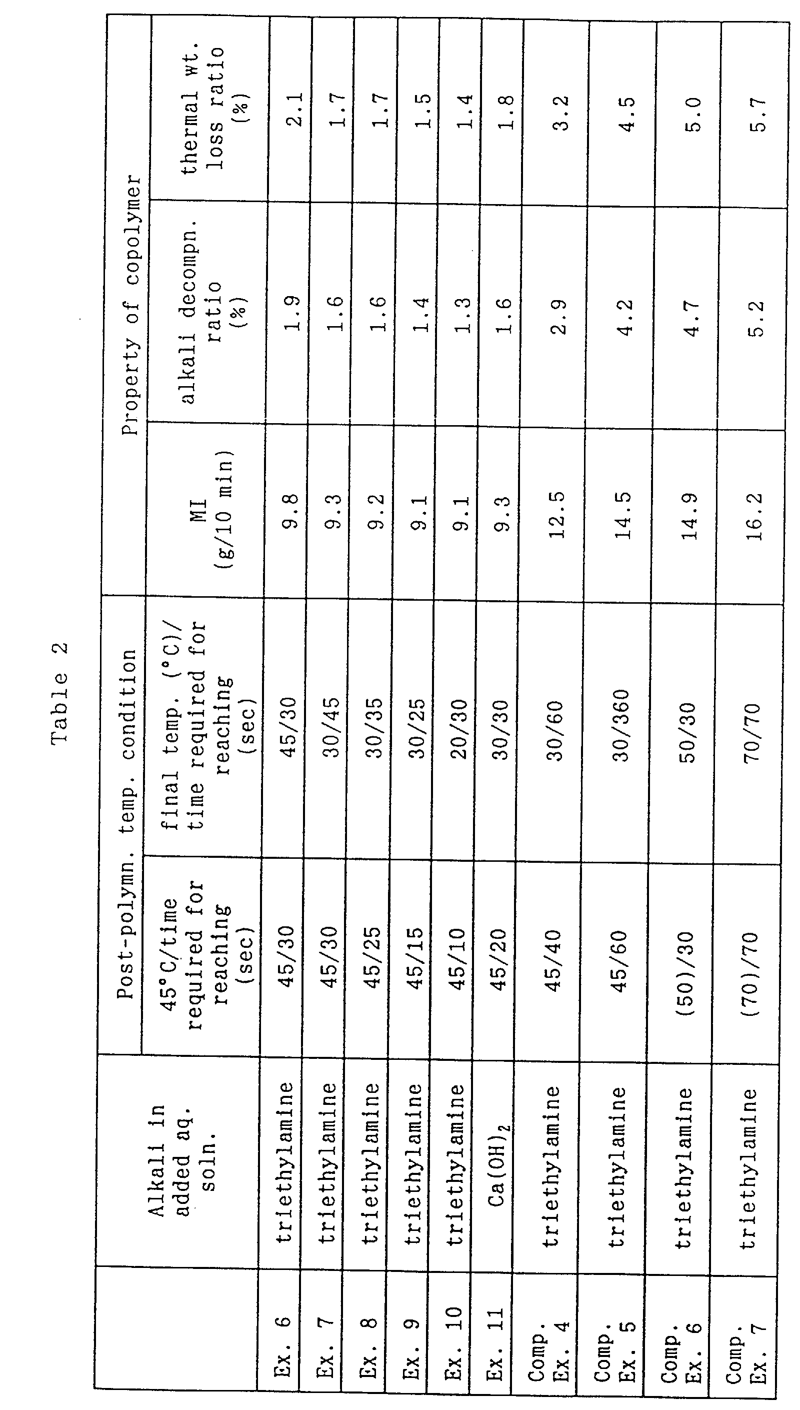

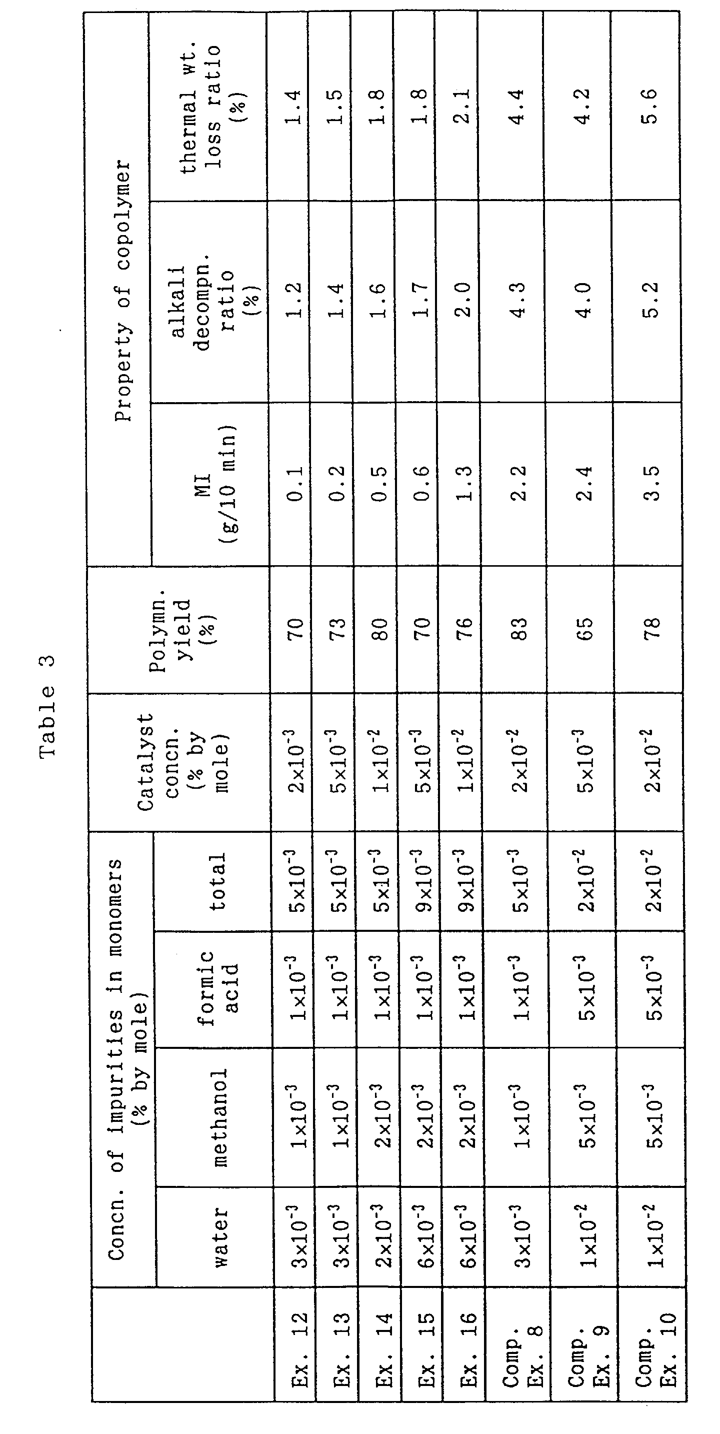

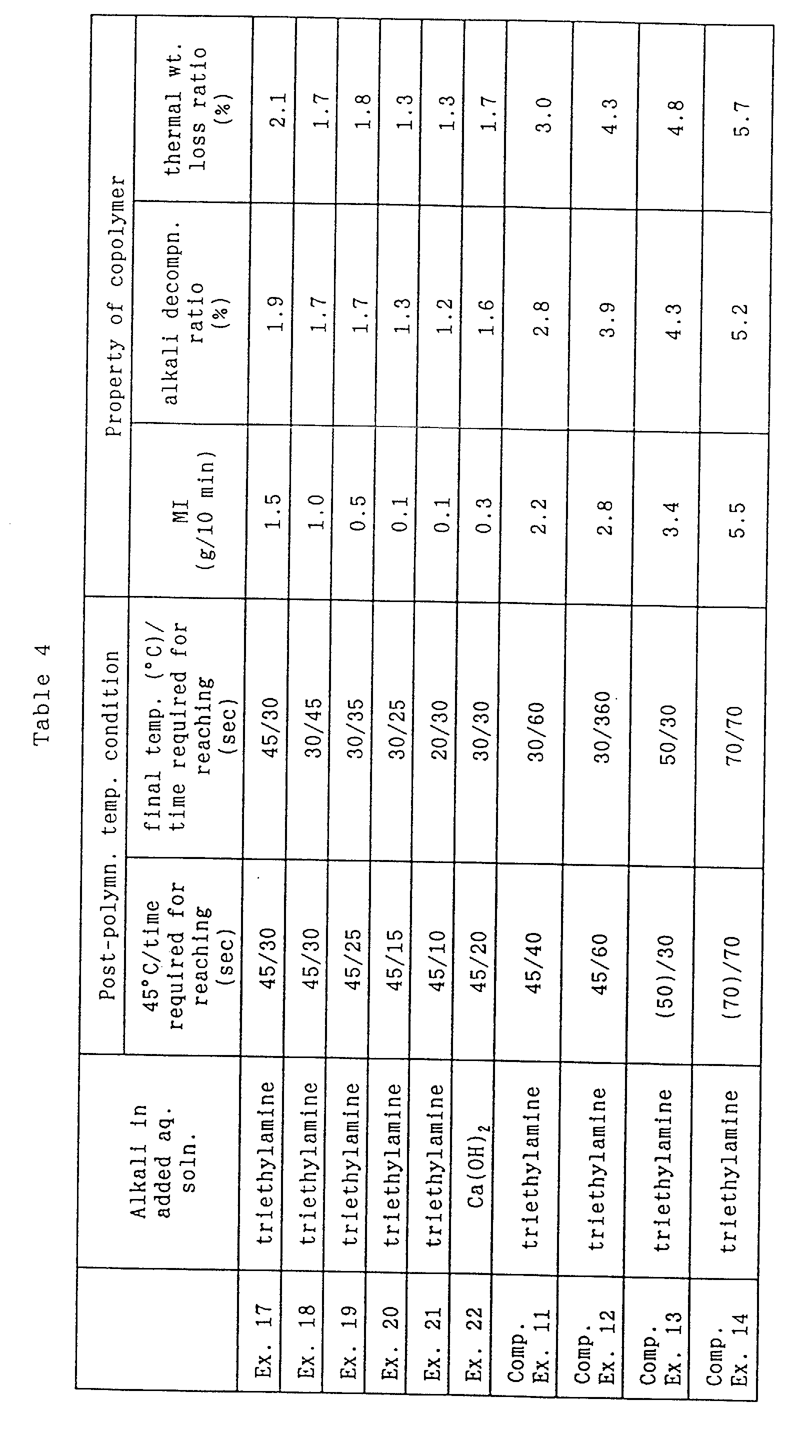

## Claims

1. A process for producing a polyoxymethylene copolymer by copolymerising trioxane as a main monomer with a cyclic ether or a cyclic formal as a comonomer in the presence of a catalyst comprising boron trifluoride or a coordination compound thereof, characterised by keeping to 1 x 10⁻²% by mole or below (based on the total amount of the monomers) the total content in the copolymerisation reaction system of impurities which would give an unstable terminal group to an obtained copolymer, using a content of the catalyst in the range of 1 x 10⁻³% to 1 x 10⁻²% by mole (based on the total amount of the monomers), and adding a basic compound and cooling the obtained product to a temperature of 45°C or below within 30 seconds after the completion of the copolymerisation to deactivate the catalyst.

2. A process for producing a substantially linear polyoxymethylene copolymer of a high degree of polymerisation by copolymerising trioxane as a main monomer with a cyclic ether or a cyclic formal as a comonomer in the presence of a catalyst comprising boron trifluoride or a coordination compound thereof, characterised by keeping to 1 x 10⁻²% by mole or below (based on the total amount of the monomers) the total content in the copolymerisation reaction system of impurities having short-stopping or chain transfer function, using a content of the catalyst in the range of 1 x 10⁻³% to 1 x 10⁻²% by mole (based on the total amount of the monomers), and adding a basic compound and cooling the obtained product to a temperature of 45°C or below within 30 seconds after the completion of the copolymerisation to deactivate the catalyst.

3. A process according to claim 2, wherein the copolymer is a substantially linear polyoxymethylene of a high degree of polymerisation with a melt index (190°C, load: 2160 g) of 2.0 g/10 min or below.

4. A process according to any preceding claim, wherein the content of the defined impurities is kept to 5 x 10⁻³% by mole or below (based on the total amount of the monomers).

5. A process according to any preceding claim, wherein the copolymerisation is conducted at a temperature in the range 60 to 105°C.

6. A process according to any preceding claim, wherein the content of the catalyst is in the range of 1 x 10⁻³% to 7 x 10⁻³% by mole (based on the total amount of the monomers).

7. A process according to any preceding claim, wherein the obtained product is cooled to a temperature of 45°C or below within 20 seconds after the completion of the copolymerisation to deactivate the catalyst.

8. A process according to any preceding claim, wherein the obtained product is cooled to a temperature in the range 35 to 15°C after the completion of the copolymerisation to deactivate the catalyst.

9. A process according to any preceding claim, wherein the cooling of the product after the completion of the copolymerisation is conducted with a cold solution of a basic compound.

10. A process according to claim 9, wherein the solvent of the cold solution is water or an aqueous solution.

## Patentansprüche

1. Verfahren zur Herstellung eines Polyoxymethylen-Copolymers durch Copolymerisieren von Trioxan als einem Hauptmonomer mit einem cyclischen Ether oder einem cyclischen Formal als einem Comonomer in Gegenwart eines Katalysators, umfassend Bortrifluorid oder eine Koordinationsverbindung desselben, dadurch gekennzeichnet, daß man den Gesamtgehalt an Verunreinigungen in der Copolymerisationsreaktion, die einem erhaltenen Copolymer eine instabile terminale Gruppe erteilen würden, bei 1 x 10⁻² Mol-% oder weniger (bezogen auf die Gesamtmenge der Monomeren) hält, einen Katalysatorgehalt im Bereich von 1 x 10⁻³ bis 1 x 10⁻² Mol-% (bezogen auf die Gesamtmenge der Monomeren) verwendet, und eine basische Verbindung zufügt, und das erhaltene Produkt innerhalb von 30 Sekunden nach der Vervollständigung der Copolymerisation auf eine Temperatur von 45 °C oder weniger abkühlt, um den Katalysator zu desaktivieren.

2. Verfahren zur Herstellung eines im wesentlichen linearen Polyoxymethylen-Copolymers mit einem hohen Polymerisationsgrad durch Copolymerisieren von Trioxan als einem Hauptmonomer mit einem cyclischen Ether oder einem cyclischen Formal als einem Comonomer in Gegenwart eines Katalysators, umfassend Bortrifluorid oder eine Koordinationsverbindung desselben, dadurch gekennzeichnet, daß man den Gesamtgehalt der Verunreinigungen, die eine inhibierende Kettenabbruch- oder eine Kettenübertragungsfunktion aufweisen, in der Copolymerisationsreaktion, bei 1 x 10⁻² Mol-% oder weniger (bezogen auf die Gesamtmenge der Monomeren) hält, einen Katalysatorgehalt im Bereich von 1 x 10⁻³ bis 1 x 10⁻² Mol-% (bezogen auf die Gesamtmenge der Monomeren) verwendet, und eine basische Verbindung zugibt, und das erhaltene Produkt innerhalb von 30 Sekunden nach der Vervollständigung der Copolymerisation auf eine Temperatur von 45 °C oder weniger abkühlt, um den Katalysator zu desaktivieren.

3. Verfahren gemäß Anspruch 2, worin das Copolymer im wesentlichen ein lineares Polyoxymethylen eines hohen Polymerisationsgrades und eines Schmelzindexes (190 °C, Last: 2160 g) von 2,0 g/10 min oder weniger ist.

4. Verfahren gemäß irgendeinem der vorhergehenden Ansprüche, worin der Gehalt der definierten Verunreinigungen bei 5 x 10⁻³ Mol-% oder weniger (bezogen auf die Gesamtmenge der Monomeren) gehalten wird.

5. Verfahren gemäß irgendeinem der vorhergehenden Ansprüche, worin die Copolymerisation bei einer Temperatur im Bereich von 60 bis 105 °C durchgeführt wird.

6. Verfahren gemäß irgendeinem der vorhergehenden Ansprüche, worin der Gehalt des Katalysators im Bereich von 1 x 10⁻³ % bis 7 x 10⁻³ Mol-% (bezogen auf die Gesamtmenge der Monomeren) gehalten wird.

7. Verfahren gemäß irgendeinem der vorhergehenden Ansprüche, worin das erhaltene Produkt innerhalb von 20 Sekunden nach der Vervollständigung der Copolymerisation auf eine Temperatur von 45 °C oder weniger abgekühlt wird, um den Katalysator zu desaktivieren.

8. Verfahren gemäß irgendeinem der vorhergehenden Ansprüche, worin das erhaltene Produkt nach der Vervollständigung der Copolymerisation auf eine Temperatur im Bereich von 35 °C bis 15 °C abgekühlt wird, um den Katalysator zu desaktivieren.

9. Verfahren gemäß irgendeinem der vorhergehenden Ansprüche, worin das Abkühlen des Produkts nach der Vervollständigung der Copolymerisation mit einer kalten Lösung einer basischen Verbindung durchgeführt wird.

10. Verfahren gemäß Anspruch 9, worin das Lösungsmittel der kalten Lösung Wasser oder eine wäßrige Lösung ist.

## Revendications

1. Un procédé pour produire un copolymère polyoxyméthylène par copolymérisation de trioxanne comme monomère principal avec un éther cyclique ou un formal cyclique comme comonomère en présence d'un catalyseur comprenant du trifluorure de bore ou un composé de coordination de celui-ci, caractérisé par le maintien à 1 × 10⁻² % en moles ou moins (par rapport à la quantité totale des monomères) de la teneur totale du système réactionnel de polymérisation en impuretés qui donneraient un groupe terminal instable à un copolymère obtenu, l'utilisation d'un taux du catalyseur compris dans l'intervalle de 1 × 10⁻³ % à 1 × 10⁻² % en moles (par rapport à la quantité totale des monomères), et l'addition d'un composé basique et le refroidissement du produit obtenu à une température de 45°C ou moins dans les 30 secondes qui suivent l'achèvement de la polymérisation pour désactiver le catalyseur.

2. Un procédé pour produire un copolymère polyoxyméthylène sensiblement linéaire ayant un haut degré de polymérisation par copolymérisation de trioxanne comme monomère principal avec un éther cyclique ou un formal cyclique comme comonomère en présence d'un catalyseur comprenant du trifluorure de bore ou un composé de coordination de celui-ci, caractérisé par le maintien à 1 × 10⁻² % en moles ou moins (par rapport à la quantité totale des monomères) de la teneur totale du système réactionnel de polymérisation en impuretés ayant une fonction d'arrêt prématuré ou de transfert de chaîne, l'utilisation d'un taux du catalyseur compris dans l'intervalle de 1 × 10⁻³ % à 1 × 10⁻² % en moles (par rapport à la quantité totale des monomères), et l'addition d'un composé basique et le refroidissement du produit obtenu à une température de 45°C ou moins dans les 30 secondes qui suivent l'achèvement de la polymérisation pour désactiver le catalyseur.

3. Un procédé selon la revendication 2, dans lequel le copolymère est un polyoxyméthylène sensiblement linéaire ayant un haut degré de polymérisation avec un indice de fusion (190°C, charge : 2160 g) de 2,0 g/10 min ou moins.

4. Un procédé selon l'une quelconque des revendications précédentes, dans lequel la teneur en les impuretés définies est maintenue à 5 × 10⁻³ % en moles ou moins (par rapport à la quantité totale des monomères).

5. Un procédé selon l'une quelconque des revendications précédentes, dans lequel la copolymérisation est conduite à une température comprise dans l'intervalle de 60 à 105°C.

6. Un procédé selon l'une quelconque des revendications précédentes, dans lequel le taux du catalyseur est compris dans l'intervalle de 1 × 10⁻³ % à 7 × 10⁻³ % en moles (par rapport à la quantité totale des monomères).

7. Un procédé selon l'une quelconque des revendications précédentes, dans lequel le produit obtenu est refroidi à une température de 45°C ou moins dans les 20 secondes qui suivent l'achèvement de la copolymérisation pour désactiver le catalyseur.

8. Un procédé selon l'une quelconque des revendications précédentes, dans lequel le produit obtenu est refroidi à une température comprise dans l'intervalle de 35 à 15°C après l'achèvement de la copolymérisation pour désactiver le catalyseur.

9. Un procédé selon l'une quelconque des revendications précédentes, dans lequel le refroidissement du produit après l'achèvement de la copolymérisation est conduit avec une solution froide d'un composé basique.

10. Un procédé selon la revendication 9, dans lequel le solvant de la solution froide est l'eau ou une solution aqueuse.
